# EUROPÄISCHE PATENTANMELDUNG

(11) **EP 4 571 613 A1**
(43) Veröffentlichungstag der Anmeldung: **18.06.2025**
(21) Anmeldenummer: 24219321.7
(22) Anmeldetag: 12.12.2024
(51) Int. Cl.: G06Q 10/08, G05B 19/418, G06Q 50/60, B25J 9/16

(54) **COMPUTERIMPLEMENTIERTES VERFAHREN ZUR BESTIMMUNG EINER STEUERUNGSSTRATEGIE ZUR STEUERUNG EINES HANDHABUNGSPROZESSES ZUM HANDHABEN VON STÜCKGÜTERN, COMPUTERPROGRAMM UND HANDHABUNGSVORRICHTUNG ZUM HANDHABEN VON STÜCKGÜTERN**

(30) Priorität: 13.12.2023 DE 102023134877
(71) Anmelder: Körber Supply Chain Logistics GmbH, 78467 Konstanz (DE)
(72) Erfinder: Pfeiffer, Frank, 78479 Reichenau (DE); Schall, Martin, 78467 Konstanz (DE); Zettler, Michael, 78476 Allensbach (DE)
(74) Vertreter: Müller Schupfner & Partner Patent- und Rechtsanwaltspartnerschaft mbB (Muc)

(57) **Zusammenfassung**

Es wird ein computerimplementiertes Verfahren zur Bestimmung einer Steuerungsstrategie zur Steuerung eines Handhabungsprozesses von zumindest einer Handhabungsvorrichtung (1) zum Handhaben von Stückgütern (2) bereitgestellt. Das Verfahren umfasst ein Erfassen oder Erlangen zumindest einer Stückgutinformation zumindest eines Stückguts (2), welches von der Handhabungsvorrichtung (1) gehandhabt wurde, ein Übermitteln der zumindest einen Stückgutinformation zu einer Datenzentrale (7), ein Bestimmen zumindest einer Schlüsselkennzahl des Handhabungsprozesses der Handhabungsvorrichtung (1) basierend auf der zumindest einen Stückgutinformation, ein Bestimmen einer Steuerungsstrategie für die zumindest eine Handhabungsvorrichtung (1) basierend auf der zumindest einen Schlüsselkenn-zahl. Ferner wird ein Computerprogramm und eine Handhabungsvorrichtung (1) bereitgestellt.

## Beschreibung

Die vorliegende Erfindung betrifft ein computerimplementiertes Verfahren zur Bestimmung einer Steuerungsstrategie zur Steuerung eines Handhabungsprozesses von zumindest einer Handhabungsvorrichtung zum Handhaben von Stückgütern, ein Computerprogramm und eine Handhabungsvorrichtung zum Handhaben von Stückgütern in einem Handhabungsprozess.

Eine Anpassung von Steuerungsstrategien von in Betrieb befindlichen Handhabungsvorrichtungen gestaltet sich aufgrund von sich ändernden Randbedingungen oft schwierig. So ist es bei Handhabungsvorrichtungen, die Stückgüter handhaben, oft problematisch, wenn sich die Stückgüter ändern. Mit anderen Worten kann es vorkommen, dass sich Stückgutströme auf unvorhersehbare Art und Weise ändern. So ist in den vergangenen Jahren ein Wechsel von eher starren Stückgütern hin zu flexiblen und oft nur teilgefüllten taschenartigen Stückgütern vollzogen worden. Eine Anpassung von Handhabungsvorrichtungen findet oft aufgrund von Beobachtungen eines Nutzers iterativ statt. So wird manuell an der Steuerung von Handhabungsvorrichtungen feinjustiert, um ein Auftreten von Fehlern bei der Handhabung zu vermeiden.

Ein solches Vorgehen ist jedoch oft subjektiv und abhängig von der persönlichen Erfahrung des Nutzers. Ferner ist eine manuelle Steuerung zeitaufwendig und es können oft nicht alle Randbedingungen gleichzeitig berücksichtigt werden.

Daher ist es eine Aufgabe der vorliegenden Erfindung ein Verfahren und eine Vorrichtung bereitzustellen, die eine Steuerung einer Handhabungsvorrichtung für Stückgüter auf sich ändernde Randbedingungen anpassen kann.

Das obige Problem wird mit einem computerimplementierten Verfahren mit den Merkmalen des Anspruchs 1, mit einem Computerprogramm mit den Merkmalen des Anspruchs 14 und mit einer Handhabungsvorrichtung mit den Merkmalen des Anspruchs 15 gelöst. Vorteilhafte Ausgestaltungen sind in den Unteransprüchen angegeben.

Gemäß einem Aspekt der vorliegenden Erfindung wird ein computerimplementiertes Verfahren zur Bestimmung einer Steuerungsstrategie zur Steuerung eines Handhabungsprozesses von zumindest einer Handhabungsvorrichtung zum Handhaben von Stückgütern bereitgestellt. Das Verfahren kann umfassen: Ein Erfassen oder Erlangen zumindest einer Stückgutinformation zumindest eines Stückguts, welches von der Handhabungsvorrichtung gehandhabt wurde. Ferner kann das Verfahren umfassen: Ein Übermitteln der zumindest einen Stückgutinformation zu einer Datenzentrale. Ferner kann das Verfahren umfassen: Ein Bestimmen zumindest einer Schlüsselkennzahl des Handhabungsprozesses der Handhabungsvorrichtung basierend auf der zumindest einen Stückgutinformation. Das Verfahren kann umfassen: Ein Bestimmen einer Steuerungsstrategie für die zumindest eine Handhabungsvorrichtung basierend auf der zumindest einen Schlüsselkennzahl.

Gegenüber dem bekannten Stand der Technik liefert die vorliegende Erfindung den Vorteil, dass die Datenzentrale basierend auf Schlüsselkennzahlen der Handhabungsvorrichtung eine Steuerungsstrategie der Handhabungsvorrichtung anpassen kann. Damit kann auf wechselnde Randbedingungen wie beispielsweise ein sich änderndes Stückgutspektrum automatisiert reagiert werden. Ferner kann durch Berücksichtigen von zumindest einer Schlüsselkennzahl ein objektives Bewertungskriterium herangezogen werden, um die Steuerungsstrategie anzupassen.

Bei dem Handhabungssystems kann es sich um einen Prozess handeln, bei dem Stückgüter physisch gehandhabt werden. Genauer gesagt kann es sich bei dem Prozess um einen Vereinzelungsprozess, einen Sortierprozess und/oder einen anderweitigen Prozess handeln, bei dem ein Stückgut physisch bewegt wird. Die Handhabung kann also eine physische Verlagerung des Stückguts umfassen. Die Steuerungsstrategie kann eine Handhabungsstrategie des Stückguts sein. Die Steuerungsstrategie kann beispielsweise durch eine Steuervorrichtung angewendet werden. Dabei kann die Steuerungsstrategie für Steuerbefehle verantwortlich sein, gemäß denen die Handhabungsvorrichtung gesteuert wird. Beispielsweise können Eingangsdaten der Steuervorrichtung zugeführt werden, woraufhin die Steuervorrichtung basierend auf der Steuerungsstrategie die Eingangsdaten verarbeitet und Ausgangsdaten ausgibt. Die Ausgangsdaten können Steuerbefehle zur Steuerung der Handhabungsvorrichtung umfassen. Damit können die Steuerbefehle direkt von der Steuerungsstrategie abhängig sein. Mit anderen Worten können bei einer Änderung der Steuerungsstrategie auch die Steuerungsbefehle geändert werden. Ein Stückgut kann ein beliebiger Gegenstand sein, der zu handhaben ist. Beispielsweise kann ein Stückgut ein Paket, ein Päckchen, eine Versandtasche, ein Versandbeutel, Smalls, Polybag oder dergleichen sein. Beispielsweise kann das Stückgut ein Poststück sein. Ferner kann das Stückgut auch eine Ware sein, die beispielsweise in ein Lagerhaus ein- und ausgeführt wird. Darüber hinaus können die Stückgüter auch Behälter sein, in denen Waren transportiert werden, wie beispielsweise in einem Warenhaus. Ferner ist denkbar, dass Stückgüter auch Reisegepäck, Koffer und Taschen umfassen können. Stückgutinformationen können indikativ für eine Eigenschaft des Stückguts sein. Ferner kann die Stückgutinformation indikativ für während eines Handhabungsprozesses angefallene Informationen bezüglich des Stückguts sein. So kann die Stückgutinformation beispielsweise eine fehlgeschlagene Handhabung des Stückguts umfassen. Die Stückgutinformation kann selbst eine Vielzahl von Informationen umfassen. Es können aber auch eine Vielzahl von Stückgutinformationen genutzt werden. Beispielsweise kann an jedem Erfassungsort eine Stückgutinformation erzeugt werden. Die Stückgutinformation kann auch nur für ein Vorhandensein eines Stückguts indikativ sein. Die Stückgutinformationen können in der Handhabungsvorrichtung selbst direkt erfasst werden. Ferner kann die Stückgutinformation auch durch eine andere Handhabungsvorrichtung oder Erfassungsvorrichtung erfasst worden sein. So kann die zumindest eine Stückgutinformation durch eine Vorrichtung, die stromaufwärts und/oder stromabwärts der Handhabungsvorrichtung in dem Stückgutstrom angeordnet sind, erfasst werden. In einem solchen Fall kann dem Verfahren die zumindest eine Stückgutinformation zur Verfügung gestellt werden. Damit muss die Handhabungsvorrichtung die Stückgutinformation nicht selbst erfassen. Die zumindest eine Stückgutinformation kann hierbei über eine Datenleitung erlangt werden. Ferner kann die Stückgutinformation indikativ dafür sein, wie das Stückgut in der Handhabungsvorrichtung gehandhabt wurde. Die zumindest eine Stückgutinformation kann zeitlich nach einer Handhabung des Stückguts in der Handhabungsvorrichtung erfasst oder erlangt werden. Damit kann sichergestellt sein, dass ein Erfolg oder Misserfolg der Handhabung des Stückguts in der Handhabungsvorrichtung mit in der zumindest einen Stückgutinformation umfasst ist. Die Stückgutinformation kann dann einer Datenzentrale übermittelt werden. Die Datenzentrale kann an einem anderen Ort als die Handhabungsvorrichtung angeordnet sein. Beispielsweise kann die Datenzentrale über das Internet mit der Handhabungsvorrichtung verbunden sein. Die Datenzentrale kann ferner über eine Cloud erreichbar sein oder in einer Cloud vorgesehen sein. Die Datenzentrale kann eine bidirektionale Datenleitung mit der Handhabungsvorrichtung haben. Damit kann sichergestellt sein, dass die Handhabungsvorrichtung Daten an die Datenzentrale übersenden kann und die Datenzentrale kann Daten an die Handhabungsvorrichtung übersenden. Die Datenzentrale kann beispielsweise eine grö-ßere Rechenleistung aufweisen als die Handhabungsvorrichtung (z.B. eine in der Handhabungsvorrichtung aufgenommene Steuereinheit). Dadurch kann sichergestellt sein, dass die Steuerungsstrategie effizient und/oder rasch bestimmt werden kann. Ferner kann vermieden werden, dass durch ein Bestimmen der Steuerungsstrategie in der Handhabungsvorrichtung selbst, der Handhabungsprozess leidet, weil Rechenkapazitäten zur Bestimmung oder Anwendung der Steuerungsstrategie verwendet werden müssen. Ferner bietet eine zentralisierte Datenzentrale den Vorteil, dass Stückgutinformationen einer Vielzahl von Handhabungsvorrichtungen verwendet werden können, um Steuerungsstrategien zu bestimmen. Die Datenzentrale kann dann zumindest eine Schlüsselkennzahl des Handhabungsprozesses der Handhabungsvorrichtung bestimmen. Die Schlüsselkennzahl kann ein Key-Performance-Indicator (KPI oder Leistungskennzahl) sein. Die Schlüsselkennzahl kann einen Handhabungsprozess eines Stückguts in der Handhabungsvorrichtung charakterisieren. Anhand der Schlüsselkennzahl kann ein Fortschritt oder ein Erfüllungsgrad hinsichtlich gesetzter Zielsetzungen oder kritischer Erfolgsfaktoren gemessen oder ermittelt werden. Die Schlüsselkennzahl kann z.B. ein gewünschter Erfolg des Handhabungsprozesses sein. Diese können im Vorhinein definiert werden. Somit kann ein Betreiber der Handhabungsvorrichtung definieren, welchen Zweck bzw. welche Leistung die Handhabungsvorrichtung in der konkreten Einsatzsituation liefern soll. Durch das Bestimmen der Steuerungsstrategie basierend auf der Schlüsselkennzahl kann gewährleistet werden, dass die Handhabungsvorrichtung auch die gewünschte Leistung erzielt (beispielsweise durch ein Anpassen der Steuerungsstrategie basierend auf der Schlüsselkennzahl). Die Schlüsselkennzahl kann basierend auf der zumindest einen Stückgutinformation bestimmt werden. So kann die Stückgutinformation beispielsweise angeben wie viele Stückgüter gehandhabt werden. Die Schlüsselkennzahl kann basierend auf dieser Information einen Durchsatz von Stückgütern pro Zeiteinheit angeben. Die Stückgutinformation kann auch Fehlhandhabungen angeben. Basierend darauf kann die Schlüsselkennzahl angeben, wieviel Prozent der Handhabungsprozesse erfolgreich sind. Schließlich kann die Datenzentrale eine Steuerungsstrategie für die zumindest eine Handhabungsvorrichtung basierend auf der zumindest einen Schlüsselkennzahl bestimmen. Die Datenzentrale kann die Steuerungsstrategie ferner basierend auf der zumindest einen Stückgutinformation und der zumindest einen Schlüsselkennzahl bestimmen. Die Steuerungsstrategie kann beispielsweise durch die Datenzentrale angepasst werden und geprüft werden, ob eine andere Schlüsselkennzahl erlangt wird. So kann die Datenzentrale beispielsweise die Schlüsselkennzahl überwacht werden. Somit können Änderungen erkannt werden. Eine solche Änderung kann beispielsweise auftreten, wenn sich Stückgüter ändern (z.B. deren Eigenschaften und/oder Ausgestaltungen). Daraufhin kann die Datenzentrale die Steuerungsstrategie anpassen und die neuen Schlüsselkennzahl mit den alten Schlüsselkennzahl vergleichen. Ein Unterschied zwischen der neuen Schlüsselkennzahl und der alten Schlüsselkennzahl kann dann herangezogen werden, um zu prüfen, ob die Änderung einen positiven Effekt hat oder nicht. Damit kann ein Optimieren der Schlüsselkennzahl bereitgestellt sein, welches automatisch und zentral ablaufen kann. Mit anderen Worten kann durch die Datenzentrale iterativ geprüft werden, welche Änderung sich positiv auf die Schlüsselkennzahl auswirkt. Somit kann automatisch auf sich ändernde Randbedingungen reagiert werden. Beispielsweise kann die Datenzentrale dazu ausgestaltet sein, den Handhabungsprozess in der Datenzentrale zu simulieren. Hierbei können die Stückgutinformationen, die von der Handhabungsvorrichtung geliefert wurden, der Simulation zugrunde gelegt werden, um den realen bei der Handhabungsvorrichtung vorliegenden Stückgutstrom, d. h. die dort herrschenden Randbedingungen, zu simulieren. Durch Anpassen der Steuerungsstrategie kann dann geprüft werden, ob sich eine oder mehrere Schlüsselkennzahlen ändern. Ferner kann geprüft werden, ob sich die zumindest eine Schlüsselkennzahl positiv oder negativ verändert. Mit anderen Worten kann geprüft werden, ob die gewünschte Schlüsselkennzahl erreicht wird oder nicht. Durch Bestimmen der zumindest einen Schlüsselkennzahl in der Datenzentrale kann eine Optimierung des Steuerungsverfahrens abseits von der Handhabungsvorrichtung selbst durchgeführt werden. Dadurch kann verhindert werden, dass der Handhabungsprozess durch ein Optimieren der Steuerungsstrategie beeinflusst wird. Ferner können durch eine Simulation des Handhabungsprozesses in der Datenzentrale Änderungen äußerst zügig und einfach umgesetzt werden, ohne dass ein etwaiger Neustart oder Umprogrammierung der Handhabungsvorrichtung selbst notwendig ist. Somit kann auf einfache Art und Weise die Steuerungsstrategie geändert werden und iterativ geprüft werden, ob eine geänderte Steuerungsstrategie zu der gewünschten zumindest einen Schlüsselkennzahl führt. Dadurch ist eine Anpassung auf sich ändernde Randbedingungen ohne weiteres möglich. Selbst bei bereits etablierten bzw. im Einsatz befindlichen Handhabungsvorrichtungen kann eine solche Optimierung der Steuerungsstrategie eingesetzt werden. Somit kann sichergestellt sein, dass der Handhabungsprozess eine hohe Qualität und Leistung beibehält, ohne dass Fehler in der Handhabung auftreten.

Vorzugsweise umfasst das Verfahren ferner: Ein Übermitteln der Steuerungsstrategie an die zumindest eine Handhabungsvorrichtung. Mit anderen Worten kann die von der Datenzentrale ermittelte neue Steuerungsstrategie an die Handhabungsvorrichtung übertragen werden. Am Standort der Handhabungsvorrichtung kann die neue Steuerungsstrategie dann implementiert und angewendet werden. Die Übertragung kann zu einem vorbestimmten Zeitpunkt stattfinden. Beispielsweise kann ein Freigabebefehl durch die Datenzentrale aufgenommen werden, woraufhin die neue Steuerungsstrategie übermittelt werden kann. Dadurch kann sichergestellt sein, dass die neue Steuerungsstrategie nicht während des laufenden Betriebs der Handhabungsvorrichtung übermittelt wird und somit zu Problemen im laufenden Betrieb führen kann. Ferner kann eine Übertragung der neuen Steuerungsstrategie nur dann erfolgen, wenn der Betreiber der Handhabungsvorrichtung dies auch wünscht. Somit kann der Betrieb der Handhabungsvorrichtung sichergestellt sein. Ferner kann die neue Steuerungsstrategie auch an anderer Handhabungsvorrichtungen übermittelt werden kann. Somit kann eine neu bestimmte Steuerungsstrategie auf mehrere Handhabungsvorrichtungen angewendet werden. Damit kann allgemeinen Trends, beispielsweise bei Änderung von Eigenschaften der Stückgüter, begegnet werden, ohne, dass jedes Mal eine individuelle Betrachtung der vor Ort herrschenden Randbedingungen notwendig wäre.

Vorzugsweise umfasst die zumindest eine Stückgutinformation eine Positions- und Lageinformation des Stückguts in der Handhabungsvorrichtung. Die Stückgutinformation kann mehrere Male während eines Durchlaufens oder eines Handhabens des Stückguts in der Handhabungsvorrichtung erfasst werden. Beispielsweise kann ein Stückgut zu Beginn des Handhabungsprozesses durch die Handhabungsvorrichtung analysiert werden, um die zumindest eine Stückgutinformation zu erlangen. Dann kann das Stückgut beispielsweise abhängig von dessen Position und oder einer verstrichenen Zeit erneut analysiert werden, um eine weitere Stückgutinformation zu erlangen. Somit kann eine Position und/oder eine Lage des Stückguts, während es durch die Handhabungsvorrichtung gehandhabt wird, kontinuierlich erfasst werden. Die Positionsinformation kann indikativ für eine räumliche Position des Stückguts sein. Die Lageinformation kann indikativ für eine relative Positionen des Stückguts zu der Handhabungsvorrichtung oder Elementen der Handhabungsvorrichtung sein. So ist es beispielsweise wichtig, dass eine Steuervorrichtung oder Steuereinheit der Handhabungsvorrichtung Kenntnis davon hat, welche Subkomponenten der Handhabungsvorrichtung angesteuert werden müssen, um ein bestimmtes Stückgut in einer gewünschten Art und Weise zu handhaben. Ferner kann die zumindest eine Stückgutinformation auch nach dem Handhaben des Stückguts erlangt werden. Damit kann bewertet werden, ob ein Handhaben des Stückguts erfolgreich war oder nicht. Beispielsweise ist die Handhabungsvorrichtung ein Singulierer, sodass durch eine Stückgutinformation am Ende des Singulierers bestimmt werden kann, ob das Stückgut erfolgreich singuliert (d.h. vereinzelt) wurde oder nicht. Ferner kann der Singulierer eine Vielzahl von einzelnen ansteuerbaren Sub-Komponenten aufweisen, sodass es für die Steuerungsstrategie wichtig ist, zu wissen, auf welchen Sub-Komponenten das jeweilige Stückgut aufliegt. Damit können mit der Positions- und Lageinformation des Stückguts eine erfolgreiche Handhabung des Stückguts bestimmt werden.

Vorzugsweise weist die zumindest eine Stückgutinformation eine Lageinformation des Stückguts relativ zu der Handhabungsvorrichtung auf. Damit ist es nicht notwendig, die Lageinformation des Stückguts auf beispielsweise Weltkoordinaten abzubilden. Damit kann die Handhabung der Stückgutinformation vereinfacht werden.

Vorzugsweise werden eine Vielzahl von Stückgutinformation des Stückguts während des Handhabungsprozesses der Handhabungsvorrichtung erfasst oder erlangt. Damit können Änderungen, die während der Handhabung des Stückguts in der Handhabungsvorrichtung auftreten mit erfasst werden. Beispielsweise kann somit die Handhabung des Stückguts überwacht werden.

Vorzugsweise wird die zumindest eine Stückgutinformation zumindest teilweise durch ein optisches System, insbesondere der Handhabungsvorrichtung, erfasst. Das optische System kann beispielsweise eine oder mehrere Kameras umfassen. Damit kann die zumindest eine Stückgutinformation ein Bild oder mehrere Bilder des Stückguts umfassen. Basierend auf dem zumindest einen Bild des Stückguts können weitere Stückgutinformationen abgeleitet werden. Beispielsweise ist auf einem Bild die Lage und Position des Stückguts in der Handhabungsvorrichtung ableitbar. Um eine Datenmenge zu verringern, kann das Bild des Stückguts vereinfacht werden. Beispielsweise kann auf Basis des Bildes des Stückguts eine Polygondarstellung des Stückguts erstellt werden. Vorzugsweise werden die Ecken des Stückguts erkannt und als solche definiert. Die Ecken werden dann durch Geraden miteinander verbunden. Damit kann eine Polygondarstellung erzeugt werden. Eine solche Polygondarstellung weist einen deutlich geringeren Speicherplatz auf und ist daher schneller und leichter zu verarbeiten und/oder zu versenden. Vorzugsweise werden für jedes Stückgut vier Ecken definiert. Damit kann auch ein mehr oder weniger Ecken umfassendes Stückgut annähernd genau angenähert werden, sodass eine Steuerung mit diesen Vereinfachungen problemlos möglich ist. Durch die Festlegung der Anzahl der Ecken kann das Erfassungsverfahren beschleunigt werden und Fehlinterpretation vermieden werden. Insgesamt kann dadurch das Erfassungssystem robuster realisiert sein. Das optische System kann in der Handhabungsvorrichtung selbst vorgesehen sein. Alternativ oder zusätzlich kann das optische System auch dem Handhabungssystem vor- oder nachgeschaltet sein. Bevorzugt ist das optische System vertikal oberhalb der zu handhabenden Stückgüter in dem Handhabungssystem vorgesehen. Dadurch kann eine zweidimensionale Handhabung des Stückguts auf einfache Art und Weise realisiert werden.

Vorzugsweise umfasst die zumindest eine Stückgutinformation einen Zeitstempel, ein Gewicht des Stückguts, eine Beschaffenheit des Stückguts, eine Verpackungsinformation, eine Adressinformation, eine Absenderinformation und/oder eine Information über einen Schwerpunkt des Stückguts. Damit können weitere Eigenschaften des Stückguts der Steuerungsstrategie zugrunde gelegt werden. Der Zeitstempel kann dabei indikativ dafür sein, wann die Stückgutinformation erlangt wurde. Somit kann die Stückgutinformation einem zeitlichen Zeitpunkt während der Handhabung des Stückguts durch die Handhabungsvorrichtung zugewiesen sein. Damit kann eine relative Änderung der Stückgutinformation relativ zu einer zuvor oder danach aufgenommenen Stückgutinformation festgestellt sein. Der Zeitstempel muss dabei nicht die aktuelle Zeit umfassen, sondern kann lediglich eine relative Zeit zu einem anderen Zeitpunkt sein, an dem eine weitere Stückgutinformation aufgenommen wird. Das Gewicht des Stückguts kann beispielsweise in der Handhabungsvorrichtung selbst oder durch einen zuvor absolvierten Prozess bestimmt sein. Das Gewicht kann bei der Handhabung des Stückguts dann eine Rolle spielen, wenn das Stückgut besonders leicht oder besonders schwer ist, da hier abhängig von dem Gewicht unterschiedliche Handhabungsparameter angewendet werden können. Die Beschaffenheit des Stückguts kann indikativ dafür sein, ob beispielsweise ein Band oder anderes Verschlusselement auf der Außenseite des Stückguts angeordnet ist. So kann dies beispielsweise auch eine Handhabbarkeit des Stückguts beeinflussen. Ferner kann das Stückgut ein vorstehendes Element aufweisen, welches bei der Handhabung beispielsweise nicht mechanisch gegriffen werden kann. Die Verpackungsinformation kann indikativ dafür sein, welche Beschaffenheit eine äußere Oberfläche des Stückguts hat. So können beispielsweise Poly-Bags eine andere Handhabung erfordern, als beispielsweise Karton. Die Adressinformation kann ebenfalls indikativ für Eigenschaften des Stückguts sein. So kann bestimmt werden, dass ein privater Adressat häufig eine bestimmte Art von Stückgütern zugesendet kriegt. Ähnlich ist hierbei die Absenderinformation indikativ dafür, was in dem Stückgut versendet wird. So kann beispielsweise bei einer Buchhandlung als Absender davon ausgegangen werden, dass in dem Stückgut stets ein Buch oder Ähnliches aufgenommen ist. Die Information über einen Schwerpunkt des Stückguts kann für eine Handhabung des Stückguts wichtig sein. So kann beispielsweise bei einem relativ großen Stückgut, bei dem der Schwerpunkt jedoch in einer Ecke angeordnet ist, eine andere Handhabung notwendig ist, als bei einem Stückgut, welches den Schwerpunkt relativ dazu mittig aufweist. Insgesamt kann durch die weiteren genannten Stückgutinformationen eine Handhabung des Stückguts genauer auf das jeweilige Stückgut angewendet werden. Genauer gesagt kann die Steuerungsstrategie all diese Randbedingungen mitberücksichtigen und dafür sorgen, dass Steuerbefehle individuell passend zu dem jeweiligen Stückgut ausgegeben werden.

Vorzugsweise umfasst das Erfassen oder Erlangen der zumindest einen Stückgutinformation ein bestimmen einer Kontur des Stückguts und ein Bestimmen einer

Polygondarstellung des Stückguts basierend auf der Kontur. Damit kann bei Verwendung eines optischen Systems zur Erfassung der zumindest einen Stückgutinformation Ausgabedaten des optischen Systems in deren Größe verringert werden. Genauer gesagt kann lediglich ein Umriss des Stückguts verwendet werden, um die Polygondarstellung zu erlangen. Damit kann die Datengröße so reduziert werden, dass ein zügiges Bestimmen der Stückgutinformation sowie ein effizientes verarbeiten der Stückgutinformation möglich ist.

Vorzugsweise wird die Polygondarstellung alle 30ms bestimmt. Die Bestimmung der Polygondarstellung kann so lange andauern, wie das Stückgut von der Handhabungsvorrichtung gehandhabt wird. Genauer gesagt kann die Polygondarstellung zu Beginn der Handhabung des Stückguts durch die Handhabungsvorrichtung bestimmt werden und dann alle 30ms bestimmt werden, bis die Handhabung des Stückguts durch die Handhabungsvorrichtung beendet ist. Dadurch kann sichergestellt sein, dass kontinuierlich überwacht wird, wie das Stückgut durch die Handhabungsvorrichtung gehandhabt wird.

Vorzugsweise ist die zumindest eine Schlüsselkennzahl indikativ für eine Lücke zwischen zwei Stückgütern, einen Durchsatz von Stückgütern pro Zeiteinheit, eine Lage eines Stückguts am Ausgang der Handhabungsvorrichtung und/oder eine Fehlerquote der Handhabung des Stückguts. Damit können definierte Sollwerte bestimmt werden, die das Resultat der Handhabung der Handhabungsvorrichtung definieren. Die Lücke zwischen 2 Stückgütern kann der geringste Abstand zwischen 2 aufeinanderfolgenden Stückgütern im Stückgutstrom sein. Beispielsweise ist es in dem Fall, bei dem die Handhabungsvorrichtung ein Singulierer ist, notwendig, dass die Stückgüter einen gewünschten Abstand zueinander aufweisen. Dadurch kann eine stromabwärts gelegene weitere Handhabung der Stückgüter sichergestellt sein. Der Durchsatz von Stückgütern ist die Zeit, wie lange ein Stückgut benötigt, um von der Handhabungsvorrichtung gehandhabt zu werden. Beispielsweise kann der Durchsatz in gehandhabten Stückgütern pro Zeiteinheit, beispielsweise pro Stunde, bestimmt sein. Eine Lage eines Stückguts am Ausgang der Handhabungsvorrichtung kann indikativ dafür sein, ob die gewollte Lage eines Stückguts erreicht ist oder nicht. Beispielsweise kann es gewollt sein, dass ein Stückgut entlang seiner längsten Erstreckungsachse orientiert ist. In diesem Fall kann, durch die Lage des Stückguts am Ende der Handhabungsvorrichtung bestimmt werden, ob die Handhabung der Handhabungsvorrichtung erfolgreich war und das Stückgut wie gewünscht orientiert ist. Eine Fehlerquote der Handhabung kann indikativ dafür sein, wie oft ein Stückgut während der Handhabung in der Handhabungsvorrichtung zu einem Fehler geführt hat. Beispielsweise bei dem Fall, bei dem die Handhabungsvorrichtung eine Sauggreifvorrichtung ist, kann ein Fehler dann vorliegen, wenn ein Stückgut von der Sauggreifvorrichtung abfällt. In dem Fall, bei dem die Handhabungsvorrichtung ein Singulierer ist, kann ein Fehler beispielsweise dann auftreten, wenn sich ein Stückgut verklemmt. Durch die Fehlerquote kann beispielsweise definiert werden, dass bei der Handhabung eines Stückguts beispielsweise lediglich bei einem Prozent der gehandhabten Stückgüter ein Fehler auftreten darf. Durch die Definition zumindest einer der obigen Schlüsselkennzahlen besteht die Möglichkeit, die Steuerungsstrategie der Handhabungsvorrichtung individuell auf den gewünschten Output anzupassen.

Vorzugsweise wird die zumindest eine Schlüsselkennzahl ausgegeben, insbesondere zu einer Anzeigevorrichtung der Handhabungsvorrichtung. Die Schlüsselkennzahl kann beispielsweise in der Handhabungsvorrichtung selbst und/oder in der Datenzentrale bestimmt werden. In jedem Fall kann die zumindest eine Schlüsselkennzahl einem Nutzer dargestellt werden. Somit kann für den Nutzer transparent dargestellt sein, wie die Handhabungsvorrichtung funktioniert, und ob gesetzte Schlüsselkennzahlen erreicht werden oder nicht. Die Anzeigevorrichtung kann beispielsweise ein Monitor an der Handhabungsvorrichtung sein.

Vorzugsweise erfolgt das Bestimmen einer Steuerungsstrategie mittels eines digitalen Zwillings der Handhabungsvorrichtung. Vorzugsweise erfolgt das Bestimmen einer Steuerungsstrategie mittels eines digitalen Zwillings der Handhabungsvorrichtung in der Datenzentrale. Die Datenzentrale kann zur Simulation der Steuerungsstrategie einen digitalen Zwilling der Handhabungsvorrichtung nutzen. Ein digitaler Zwilling kann ein genaues, digitales Abbild der Handhabungsvorrichtung sein. Beispielsweise kann der digitale Zwilling dieselben physikalischen und ausgestaltungstechnischen Grundlagen, wie sie bei der Handhabungsvorrichtung in Realität herrschen berücksichtigen. Vorzugsweise kann hierzu die finite Elemente-Methode genutzt werden. Der digitale Zwilling kann, basierend auf den in Realität gemessenen Randbedingungen, während eines Betriebs der Handhabungsvorrichtung erstellt und kalibriert werden. So können beispielsweise die Stückgutinformationen einer in Realität betriebenen Handhabungsvorrichtung genutzt werden, um einen digitalen Zwilling zu erstellen, der genauso reagiert, wie die Handhabungsvorrichtung in Realität. Damit kann insbesondere gemeint sein, dass ein Stückgut, welches von der real existierenden Handhabungsvorrichtung in einer bestimmten Weise gehandhabt wird, auch durch den digitalen Zwilling auf dieselbe Art und Weise gehandhabt wird. Durch den digitalen Zwilling kann also die Möglichkeit geschaffen werden, Änderungen an der Handhabungsvorrichtung bzw. an deren Steuerung (d. h. der Steuerungsstrategie) vorzunehmen, ohne dass eine aufwändige Anpassung oder Änderung der in Realität vorhandenen Handhabungsvorrichtungen nötig wäre. Mittels des digitalen Zwillings kann auf einfache Art und Weise iterativ Änderungen vorgenommen werden und geprüft werden, wie sich diese Änderungen auswirken. Insbesondere kann die zumindest eine Schlüsselkennzahl auch von einem simulierten Betrieb des digitalen Zwillings erlangt werden. Die so erlangte Schlüsselkennzahl des digitalen Zwillings kann dann mit unterschiedlichsten Steuerungsstrategien beobachtet werden. Durch die schnelle und einfach Implementierbarkeit einer neuen Steuerungsstrategie bei dem digitalen Zwilling kann somit noch schnelle bestimmt werden welche Änderung an der Steuerungsstrategie zu welchen Auswirkungen (ggf. Verbesserungen) führt.

Vorzugsweise simuliert der digitale Zwilling den Handhabungsprozess der Handhabungsvorrichtung. Mit anderen Worten kann digital unter Berücksichtigung der in der Realität vorherrschenden Randbedingungen der Handhabungsprozess simuliert werden. Randbedingungen aus der Realität können hierbei die physikalischen Gesetzmäßigkeiten (beispielsweise Schwerkraft, Reibung, Temperatur und dergleichen) berücksichtigt werden. Die Informationen über die Handhabungsvorrichtung selbst kann von dem Nutzer und/oder dem Hersteller kommen. Die Informationen über die Stückgüter können der zumindest ein Stückgutinformation entnommen werden.

Vorzugsweise wird mittels Verwendung des digitalen Zwillings eine neue Steuerungsstrategie geprüft. Mit anderen Worten kann die Steuerungsstrategie des digitalen Zwillings angepasst werden. Beispielsweise kann hierbei eine Geschwindigkeit, mit der die Handhabungsvorrichtung die Stückgüter handhabt, angepasst werden. Nach dem Anpassen der Steuerungsstrategie, d. h. nach Implementieren einer neuen Steuerungsstrategie, kann dann die zumindest eine Schlüsselkennzahl, welche der digitale Zwilling liefert, ermittelt werden. Damit kann zum einen geprüft werden, welche Anpassung der Steuerungsstrategie welche Schlüsselkennzahl wie beeinflusst. Damit kann auf einfache Art und Weise geprüft werden, wie sich die Handhabungsvorrichtung bei einer geänderten Steuerung verhält. Insbesondere kann mit diesem Vorgehen eine Steuerung der Handhabungsvorrichtung so angepasst werden, dass sie die gewünschte zumindest eine Schlüsselkennzahl erreicht. So kann beispielsweise die Steuerungsstrategie des digitalen Zwillings solang angepasst werden, bis eine Fehlerquote den gewünschten Bereich erreicht. Ferner kann die Steuerungsstrategie auch so angepasst werden, dass auch mehrere Schlüsselkennzahlen erreicht sind. So kann beispielsweise der Durchsatz der Handhabungsvorrichtung erhöht werden, jedoch ist gleichzeitig die Gefahr gegeben, dass sich dadurch auch die Fehlerquote erhöht. Durch die Möglichkeit, dies mit dem digitalen Zwilling mit relativ wenig Aufwand prüfen zu können, bietet sich die Möglichkeit, eine optimal geeignete Steuerungsstrategie zu implementieren.

Vorzugsweise umfasst das Bestimmen einer neuen Steuerungsstrategie ein optimieren der neuen Steuerungsstrategie des digitalen Zwillings. Mit anderen Worten kann mit optimieren gemeint sein, dass die Schlüsselkennzahl, welche von der Handhabungsvorrichtung erreicht werden soll, bestmöglich durch den digitalen Zwilling erreicht wird. Mit anderen Worten kann es ausreichend sein, wenn die Schlüsselkennzahl im Wesentlichen erreicht wird oder sich ein Ergebnis dieser Schlüsselkennzahl annähert, ohne diese jedoch zu erreichen. Dies kann darin liegen, dass es oft nicht möglich ist, eine gewünschte Schlüsselkennzahl zu erreichen. So kann es beispielsweise unmöglich sein, eine Fehlerquote von 0 % zu erreichen. Daher kann das Verfahren ein Optimieren der Steuerungsstrategie des digitalen Zwillings umfassen, bei dem ein Ergebnis erzielt wird, welches der gewünschten Schlüsselkennzahl möglichst nahekommt.

Vorzugsweise umfasst das Verfahren ferner: Ein Vergleichen der Steuerungsstrategie der Handhabungsvorrichtungen mit der neuen Steuerungsstrategie des digitalen Zwillings, und ein Erstellen einer Bewertung der Steuerungsstrategien basierend auf dem Vergleich. Ist unter Zuhilfenahme des digitalen Zwillings eine neue Steuerungsstrategie erstellt worden, kann diese mit der in der realen Handhabungsvorrichtung implementierten Steuerungsstrategie verglichen werden. Damit kann geprüft werden, ob die neue Steuerungsstrategie zu besseren Ergebnissen führt als die bereits implementierte Steuerungsstrategie. Das Ergebnis dieses Vergleichs kann die Bewertung der Steuerungsstrategien sein. Somit kann der Handhabungsvorrichtung, welche in Realität existiert, entweder eine neue Steuerungsstrategie übermittelt werden oder bestimmt werden, dass die Handhabungsvorrichtung bereits maximal optimiert für die jeweils gewünschten Schlüsselkennzahlen arbeitet. Ferner kann die Bewertung für einen Nutzer der Handhabungsvorrichtung eine wichtige Information sein, um den Betrieb der Handhabungsvorrichtung gegebenenfalls anzupassen. So kann eine neue Steuerungsstrategie angewendet werden, die nicht unbedingt insgesamt eine verbesserte Handhabung der Stückgüter liefert, jedoch für den jeweiligen individuellen Betrieb der Handhabungsvorrichtung vorteilhaft sein kann. So kann es für manche Bereiche vorteilhaft sein, den Durchsatz von Stückgütern zu erhöhen, auch wenn gleichzeitig eine Fehlerquote mit ansteigt. Damit bietet dieses Verfahren eine Möglichkeit für den Nutzer, seine Handhabungsvorrichtung individuell auf die jeweiligen Anforderungen zu optimieren.

Vorzugsweise wird bei dem Erfassen oder Erlangen der Stückgutinformation jedes Stückgut einzeln betrachtet. Somit kann sichergestellt sein, dass während der Handhabung eines Stückguts die Stückgutinformationen, welche fortlaufend während der Handhabung erlangt werden, individuell dem einen Stückgut zuzuordnen sind.

Vorzugsweise umfasst der Handhabungsprozess der Handhabungsvorrichtung das Anwenden eines Algorithmus, wobei der Algorithmus basierend auf der Steuerungsstrategie dazu ausgestaltet ist, basierend auf Stückgutinformationen als Eingangsdaten Steuerbefehle als Ausgangsdaten auszugeben. Der Algorithmus kann in einer Steuereinheit der Handhabungsvorrichtung implementiert sein. Der Algorithmus kann ein lernender Algorithmus sein. Der Algorithmus kann in der Steuereinheit der Handhabungsvorrichtung hinterlegt sein. Der Algorithmus kann auf die Steuerungsstrategie zurückgreifen bzw. von dieser bestimmt werden. Die Eingangsdaten können beispielsweise ein Bild des handzuhabenden Stückguts sein, woraufhin die Steuereinheit (durch den Algorithmus bzw. die Steuerungsstrategie) bestimmen kann, wie das konkrete Stückgut zu handhaben ist. Um die gewünschte Handhabung des Stückguts zu erreichen, kann die Steuereinheit Steuerbefehle zu der Handhabungsvorrichtung ausgeben. Die Steuerbefehle können beispielsweise indikativ dafür sein, welche Sub-Komponente der Handhabungsvorrichtung wie anzusteuern ist, um das Stückgut zu handhaben. Ferner können die Steuerbefehle indikativ dafür sein, mit welcher Geschwindigkeit Sub-Komponenten der Handhabungsvorrichtung zu betreiben sind. Ferner können die Steuerbefehle indikativ dafür sein, mit welchem Unterdruck die Handhabungsvorrichtung zu betreiben ist. Die Steuerungsstrategie kann damit lediglich ein Teil des Algorithmus sein, der zur Steuerung der Handhabungsvorrichtung vorgesehen ist. Mit anderen Worten kann die Steuerungsstrategie nur teilweise dafür verantwortlich sein, wie ein Stückgut zu handhaben ist.

Vorzugsweise umfasst der Algorithmus ein neuronales Netz. Ein neuronales Netz kann eine beliebige Anzahl miteinander verbundene Neuronen umfassen, die einen auf eine bestimmte Funktion ausgerichteten Zusammenhang bilden. Das neuronale Netz kann dazu ausgestaltet sein, basierend auf bestimmte Eingangsdaten Ausgangsdaten auszugeben. Im vorliegenden Fall kann das neuronale Netz darauf trainiert sein, basierend auf zumindest einer Stückgutinformation Steuerungsbefehle zur Handhabung dieses Stückguts in dem Handhabungsprozess als Ausgangsdaten auszugeben. Das neuronale Netz bildet also Eingangsdaten auf Ausgangsdaten ab. Um Eingangsdaten entsprechend auf die Ausgangsdaten abzubilden, werden Gewichte oder Variablen definiert, die das Abbilden der Eingangsdaten auf die Ausgangsdaten ermöglichen. Die Variablen oder Gewichte können dabei Teil von Gleichungen sein. Durch einen Trainingsprozess können die Variablen oder Gewichte erstmalig definiert werden. Durch eine Lernfunktion können die Variablen oder Gewichte während eines Betriebs des neuronalen Netzes angepasst werden. (d. h., umtrainiert werden). Im vorliegenden Fall kann dies beispielsweise dadurch geschehen, dass Handhabungen von Stückgütern als fehlerhaft oder besonders vorteilhaft gekennzeichnet werden, wodurch die Variablen entsprechend angepasst werden können. Vorzugsweise ist die Steuerungsstrategie indikativ für die Variablen oder Gewichte des neuronalen Netzes. Mit anderen Worten bleibt die Grundstruktur des neuronalen Netzes stets konstant und es werden lediglich die Gewichte durch ein Anpassen der Steuerungsstrategie geändert. Somit kann sichergestellt sein, dass die Grundstruktur der Steuerung der Handhabungsvorrichtung stets gleichbleibt und nur geringe Anpassungen bei der Steuerung der Handhabungsvorrichtung vorgenommen werden.

Vorzugsweise umfasst der Algorithmus einen gerichteten Graph mit Gewichten. Die Gleichungen können auch grafisch dargestellt werden. Durch die Gewichte können einzelne Bereiche des Graphs angepasst bzw. verändert werden. Durch die Darstellung als Graph kann die Handhabbarkeit des Algorithmus verbessert sein.

Vorzugsweise handelt es sich bei dem Algorithmus um einen lernenden Algorithmus. Mit anderen Worten kann vorgesehen sein, dass sich der Algorithmus basierend auf den Stückgutinformationen selbst anpasst. Dadurch kann beispielsweise automatisiert auf Änderungen von Randbedingungen Rücksicht genommen werden. Vorzugsweise ist der selbstlernende Effekt jedoch limitiert, sodass eine wesentliche Änderung der Steuerungsstrategie vermieden ist. Dadurch kann ein ungewolltes Umtrainieren des in der Handhabungsvorrichtung angewendeten Algorithmus vermieden werden.

Vorzugsweise weist der Algorithmus 800 bis 1200, vorzugsweise im Wesentlichen 1000, Gewichte auf. Es wurde herausgefunden, dass mit dieser Anzahl an Gewichten ein besonders vorteilhafte Steuerung von Handhabungsvorrichtungen im Stückgutbereich erzielt werden können. Das vorsehen von mehr Gewichten für demgegenüber zu längeren Berechnungszeiten bzw. zu einem höheren Leistungsbedarf der Steuereinheit. Werden weniger Gewicht vorgesehen, kann es zu Problemen kommen bei einer Vielzahl von unterschiedlichen Stückgütern.

Vorzugsweise ist der Algorithmus dazu ausgestaltet, die Steuerungsstrategie anzupassen. Mit anderen Worten kann der Algorithmus der Steuereinheit der Handhabungsvorrichtung es zulassen, dass, insbesondere Gewichte, geändert werden. Dadurch ist die Möglichkeit eröffnet, die Steuerungsstrategie vor Ort anzupassen.

Vorzugsweise werden Stückgutinformationen von einer Vielzahl von Handhabungsvorrichtungen in der Datenzentrale aufgenommen. Mit anderen Worten können eine Vielzahl von Stückgutinformationen in der Datenzentrale verarbeitet werden. Dies liefert den Vorteil, dass auf eine Vielzahl von Daten zurückgegriffen werden kann, um eine neue Steuerungsstrategie zu entwickeln. Dadurch können neue Steuerungsstrategien robuster und für eine Vielzahl von Stückgütern geeignet erarbeitet werden.

Gemäß einer Ausführungsform der vorliegenden werden die Stückgutinformationen als gesammelten Daten bezeichnet. Die gesammelten Daten sind das Ergebnis des so genannten Vision Systems, das in jeder Handhabungsvorrichtung (z.B. einem Singulierer) läuft. Es blickt von oben auf die Handhabungsvorrichtung und erkennt jedes Element der Handhabungsvorrichtung anhand ihrer Kontur. Als Ergebnis wird ein Satz von Polygonen variabler Länge an die Bewegungssteuerung geliefert, um die Steuerbefehle an die Handhabungsvorrichtung auszugeben (z..: eine Geschwindigkeit anzupassen). Die gesammelten Daten werden zudem an eine Datenzentrale (z.B. an einen Parcel Data Hub, PDH) übertragen. Dieser Satz von Polygonen wird alle 30 ms berechnet. Auf dem PDH läuft eine Applikation, um die Handhabungs-KPIs in Echtzeit zu berechnen (Lücke, Durchsatz, Winkel eines Stückguts am Ausgang und die Fehlerrate am Ausgang). Diese Informationen dienen in erster Linie der Transparenz, um entweder eine Vereinzelung oder Ströme im Laufe der Zeit zu vergleichen. In einer so genannten Flottenumgebung verarbeitet eine Reihe von Handhabungsvorrichtungen parallel Stückgüter und jede Handhabungsvorrichtung liefert die Daten über ein lokales PDH an ein zentrales PDH. Dies ermöglicht ein einfaches Benchmarking oder Ranking einer Gruppe von Handhabungsvorrichtungen. Außerdem läuft im PDH ein Digital-Twin (d.h. ein digitaler Zwilling). Der Digital-Twin modelliert die Handhabungsvorrichtungen, z.B. die relevanten Elemente der Handhabungsvorrichtung, und ist mit einem Deep Reinforcement Learning basierten Agenten ausgestattet. Der Agent kann die Geschwindigkeit der Elemente der Handhabungsvorrichtung stimulieren. Während der Selbstanpassungsphase erhält er eine Rückmeldung, ob eine Aktion positiv oder negativ war. Positiv und negativ in Bezug auf die KPls, die als Ergebnis einer Aktion erreicht werden. Was der Agent lernt, wird in einem neuronalen Netz gespeichert. Der Agent wird mit Sequenzen von Stückgutinformationen und/oder Schlüsselkennzahlen trainiert, die von einer realen Handhabungsvorrichtung erzeugt wurden - Schritt eins. Sobald ein Agent in der Simulation trainiert wurde, kann seine Leistung anhand der Schlüsselkennzahlen mit der Realität verglichen werden, die zum Zeitpunkt der Aufzeichnung der Stückgutinformationen und/oder Schlüsselkennzahlen läuft. Wenn eine selbst angepasste Steuerungsstrategie bessere Ergebnisse erzielt als die derzeit implementierte, kann der Agent (neuronales Netzmodell) auf die physische Maschine heruntergeladen und aktiviert werden. Als Ergebnis hat die Steuerungsstrategie nun gelernt, wie sie mit dem aktuellen Strom umzugehen hat. Es kann auch relevant sein, auf der Grundlage eines Flottenansatzes schneller zu lernen. In diesem Fall wird der Agent anhand der Daten mehrerer Handhabungsvorrichtungen trainiert. Durch Transferlernen können andere Handhabungsvorrichtungen auch ohne vorheriges Erkennen eines Problems vor Ausfällen oder Leistungsverlusten bewahrt werden. Die Schlüsselkennzahlen können auch mit SmartMaintenance-Funktionen kombiniert werden, um Daten zu korrelieren und Schäden, Motor- oder andere Ausfälle genauer oder früher vorherzusagen.

Gemäß einem weiteren Aspekt der vorliegenden Erfindung wird eine Verwendung des Verfahrens gemäß einer der obigen Ausführungsformen zur Erstellung einer Steuerungsstrategie bereitgestellt.

Gemäß einem weiteren Aspekt der vorliegenden Erfindung wird ein Verfahren zum Anpassen einer Steuerungsstrategie, die zur Handhabung von Stückgütern in einer Handhabungsvorrichtung zum Handhaben von Stückgütern verwendet wird, bereitgestellt, wobei die Steuerungsstrategie gemäß einer der obigen Ausführungsformen bestimmt wird.

Gemäß einem weiteren Aspekt der vorliegenden Erfindung wird ein Computerprogramm bereitgestellt, dass Anweisungen umfasst, die, wenn das Programm von einer Rechnereinheit ausgeführt wird, die Recheneinheit veranlasst, dass Verfahren gemäß einer der obigen Ausführungsformen auszuführen. Dies gilt sowohl für Verfahren zur Bestimmung einer Steuerungsstrategie zur Steuerung eines Handhabungsprozesses von zumindest einer Handhabungsvorrichtung zum Handhaben von Stückgütern als auch für das Anpassen einer Steuerungsstrategie. Alternativ können die lernenden Algorithmen auch als Hardware implementiert werden, z.B. mit festen Verbindungen auf einem Chip oder einer anderen Rechnereinheit. Bei der Rechnereinheit, die das erfindungsgemäße Verfahren ausführen kann, kann es sich um eine beliebige Rechnereinheit wie eine CPU (Central Processing Unit) oder GPU (Graphics Processing Unit) handeln. Die Rechnereinheit kann Teil eines Computers, einer Cloud, eines Servers, eines mobilen Geräts wie eines Laptops, Tablet-Computers, Mobiltelefons, Smartphones usw. sein. Insbesondere kann die Rechnereinheit Teil eines Überwachungssystems zum Bestimmen eines Zustands einer Handhabungsvorrichtung sein. Das Überwachungssystem kann eine Anzeigevorrichtung, wie einen Computerbildschirm umfassen.

Die Erfindung bezieht sich auch auf ein computerlesbares Medium, dass Anweisungen umfasst, die, wenn sie von einer Recheneinheit ausgeführt werden, die Rechnereinheit veranlassen, das erfindungsgemäße Verfahren, insbesondere das obige Verfahren durchzuführen. Ein solches computerlesbares Medium kann ein beliebiges digitales Speichermedium sein, beispielsweise eine Festplatte, ein Server, eine Cloud oder ein Computer, ein optisches oder ein magnetisches digitales Speichermedium, eine CD-ROM, eine SSD Karte, eine SD Karte, eine DVD oder ein USB oder anderer Speicherstick. Ferner kann das Computerprogramm auch über das Internet bezogen werden.

Gemäß einem weiteren Aspekt der vorliegenden Erfindung wird eine Handhabungsvorrichtung zum Handhaben von Stückgütern in einem Handhabungsprozess bereitgestellt, umfassend zumindest ein steuerbares Element zum physischen Handhaben von Stückgütern, eine Erfassungsvorrichtung zum Erfassen von zumindest einer Stückgutinformation von zumindest einem Stückgut, dass während des Handhabungsprozesses gehandhabt wird, eine Steuervorrichtung zum Steuern des zumindest einen steuerbaren Elements gemäß einer Steuerungsstrategie basierend auf der zumindest einen Stückgutinformation, eine Sendevorrichtung, die dazu ausgestaltet ist, die Stückgutinformationen an eine Datenzentrale zu senden, eine Empfangsvorrichtung, die dazu ausgestaltet ist, eine neue Sendungsstrategie von der Datenzentrale zu empfangen, wobei die Steuereinheit dazu ausgestaltet ist, die Steuerungsstrategie entsprechen der neuen Steuerungsstrategie anzupassen. Das Anpassen der Steuerungsstrategie kann beispielsweise das Ersetzen der Steuerungsstrategie bedeuten. Die Steuervorrichtung kann dazu ausgestaltet sein, ein Verfahren gemäß einem der obigen Ansprüche auszuführen.

Einzelne Merkmale oder Ausführungsformen können mit anderen Merkmalen oder anderen Ausführungsformen kombiniert werden, um neue Ausführungsformen zu bilden. Vorteile und Ausgestaltungsmöglichkeiten der Merkmale und Ausführungsformen gelten dann analog auch für die neuen Ausführungsformen. Vorteile und Ausgestaltungen, die in Verbindung mit dem Verfahren genannt sind, gelten analog auch für die Vorrichtung und andersherum.

Im Folgenden werden zu bevorzugende Ausführungsformen mit Bezug auf die beigefügten Figuren im Detail beschrieben:
- **Fig. 1**: ist ein schematisches Ablaufdiagramm eines Verfahrens gemäß einer Ausführungsform der vorliegenden Erfindung.
- **Fig. 2**: ist eine schematische und perspektivische Darstellung einer Handhabungsvorrichtung gemäß einer Ausführungsform der vorliegenden Erfindung.
- **Fig. 3**: ist eine schematische und perspektivische Ansicht eines Teils einer Handhabungsvorrichtung gemäß einer Ausführungsform der vorliegenden Erfindung.
- **Fig. 4**: ist eine schematische Ansicht einer Handhabungsvorrichtung gemäß einer Ausführungsform der vorliegenden Erfindung.
- **Fig. 5**: ist eine schematische Ansicht eines Teils einer Handhabungsvorrichtung gemäß einer Ausführungsform der vorliegenden Erfindung, während eines Betriebs der Handhabungsvorrichtung.
- **Fig. 6**: ist eine weitere Handhabungsvorrichtung gemäß einer Ausführungsform der vorliegenden Erfindung.

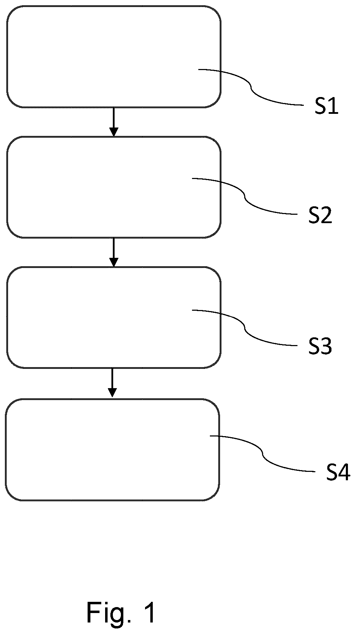

**Fig. 1** ist eine schematische Ansicht eines Ablaufdiagramms eines Verfahrens gemäß einer Ausführungsform der vorliegenden Erfindung. Das Verfahren ist zur Bestimmung einer Steuerungsstrategie zur Steuerung eines Handhabungsprozesses von zumindest einer Handhabungsvorrichtung zum Handhaben von Stückgütern ausgestaltet. Dabei ist das Verfahren ein computerimplementiertes Verfahren und steuert durch dessen Anwendung andere Instanzen und Vorrichtungen. Das Verfahren umfasst in Schritt S1 ein Erfassen oder Erlangen zumindest einer Stückgutinformation zumindest eines Stückguts, welches von der Handhabungsvorrichtung gehandhabt wurde. Mit anderen Worten wird in Schritt S1 eine Information über ein Stückgut erlangt, welches durch die Handhabungsvorrichtung gehandhabt wurde. Die Informationen können dabei Eigenschaften des Stückguts und/oder Informationen zum Handhabungsprozess, welcher abgelaufen ist, umfassen. In Schritt S2 wird die zumindest eine Stückgutinformation an eine Datenzentrale übermittelt. Die Übermittlung erfolgt bei der vorliegenden Ausführungsform über das Internet, da die Datenzentrale von der Handhabungsvorrichtung entfernt angeordnet ist. In Schritt S3 wird zumindest eine Schlüsselkennzahl des Handhabungsprozesses der Handhabungsvorrichtung bestimmt. Die Schlüsselkennzahl wird hierbei basierend auf der zumindest einen Stückgutinformation, welche zuvor übermittelt wurde, bestimmt. Anschließend wird in Schritt S4 eine Steuerungsstrategie für die zumindest eine Handhabung zu Richtung basierend auf der zumindest einen Schlüsselkennzahl bestimmt. Das Bestimmen der zumindest ein Schlüsselkennzahl kann hierbei z.B. durch Vorgabe einer gewünschten Schlüsselkennzahl erfolgen.

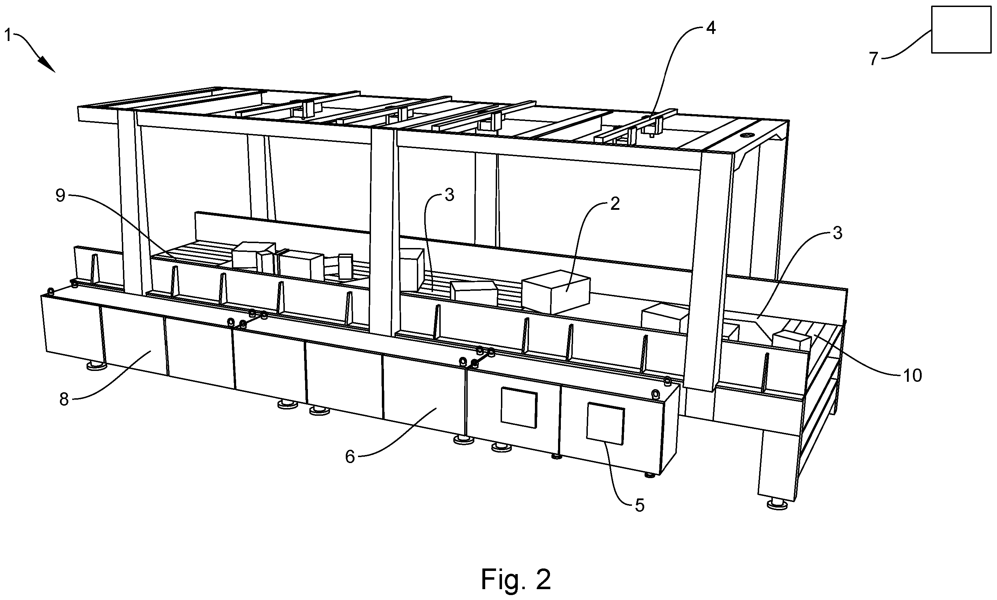

**Fig. 2** ist eine schematische und perspektivische Ansicht einer Handhabungsvorrichtung 1 zum Handhaben von Stückgütern 2 in einem Handhabungsprozess. Bei der vorliegenden Ausführungsform handelt es sich bei der Handhabungsvorrichtung 1 um einen singulärer. Mit anderen Worten kann die Handhabungsvorrichtung 1 der vorliegenden Ausführungsform aus einem zweidimensionalen Stückgutstrom einen eindimensionalen Stückgutstrom machen. Dazu werden die Stückgüter 2 an einem stromaufwärtigen Ende 9 der Handhabungsvorrichtung 1 der Handhabungsvorrichtung 1 zugeführt und einem stromabwärtigen Ende 10 der Handhabungsvorrichtung 1 ausgegeben. Die Handhabungsvorrichtung 1 weist eine Vielzahl von steuerbaren Elementen 3 auf. Bei der vorliegenden Ausführungsform sind die steuerbaren Elemente individuell an steuerbare Förderbänder, die in einer Matrixform auf einer Förderfläche der Handhabungsvorrichtung 1 angeordnet sind. Bei der vorliegenden Ausführungsform sind die steuerbaren Elemente 3, so angeordnet, dass sie in 7 Spalten und 8 Zeilen in einer Draufsicht auf die Handhabungsvorrichtung 1 angeordnet sind. Bei einer weiteren nicht dargestellten Ausführungsform sind die steuerbaren Elemente 3 in 4 Spalten und 8 Zeilen angeordnet. Die Ausgestaltung der Handhabungsvorrichtung 1 kann, basierend auf den jeweiligen Anforderungen für den Einsatz der Handhabungsvorrichtung 1 gewählt werden. Ferner weist die Handhabungsvorrichtung 1 eine Erfassungsvorrichtung 4 auf. Die Erfassungsvorrichtung 4 der vorliegenden Ausführungsform weist eine Vielzahl von Kameras auf, die vertikal oberhalb der Transportfläche der Handhabungsvorrichtung 1 angeordnet sind und die Stückgüter 2 in einer Draufsicht aufnehmen. Die Erfassungsvorrichtung 4 der vorliegenden Ausführungsform bestimmt die zumindest eine Stückgutinformation jedes Stückguts 2, welches durch die Handhabungsvorrichtung 1 abgefertigt wird. Ferner weist die Handhabungsvorrichtung 1 eine Steuervorrichtung 5 zum Steuern des zumindest einen steuerbaren Elements 3 auf. Die Steuervorrichtung seine computerähnliche Vorrichtung, die einen CPU oder GPU aufweist und Daten aufnehmen, Daten verarbeiten und Daten ausgeben kann. Genauer gesagt nimmt die Steuervorrichtung 5 Stückgutinformationen auf, verarbeitet diese basierend auf der Steuerungsstrategie in Steuerungsbefehle und gibt die Steuerungsbefehle als Ausgabedaten an die steuerbaren Elemente 3 aus. Ferner weist die Handhabungsvorrichtung 1 der vorliegenden Ausführungsform eine Sendevorrichtung 6 auf, die dazu ausgestaltet ist, Stückgutinformation an eine Datenzentrale 7 zu übermitteln. Die Datenzentrale 7 ist von der Handhabungsvorrichtung 1 beabstandet und über das Internet mit der Steuervorrichtung 5 der Handhabungsvorrichtung 1 verbunden. Ferner weist die Handhabungsvorrichtung 1 eine Empfangsvorrichtung 8 auf, die dazu ausgestaltet ist, eine neue Steuerungsstrategie von der Datenzentrale 7 zu empfangen. Die Datenzentrale 7 kann gemäß dem erfindungsgemäßen Verfahren eine neue Steuerungsstrategie entwickeln und diese der Handhabungsvorrichtung übersenden. Die Steuervorrichtung 5 ist dazu ausgestaltet, die Steuerungsstrategie entsprechend der neuen Steuerungsstrategie anzupassen oder auszutauschen.

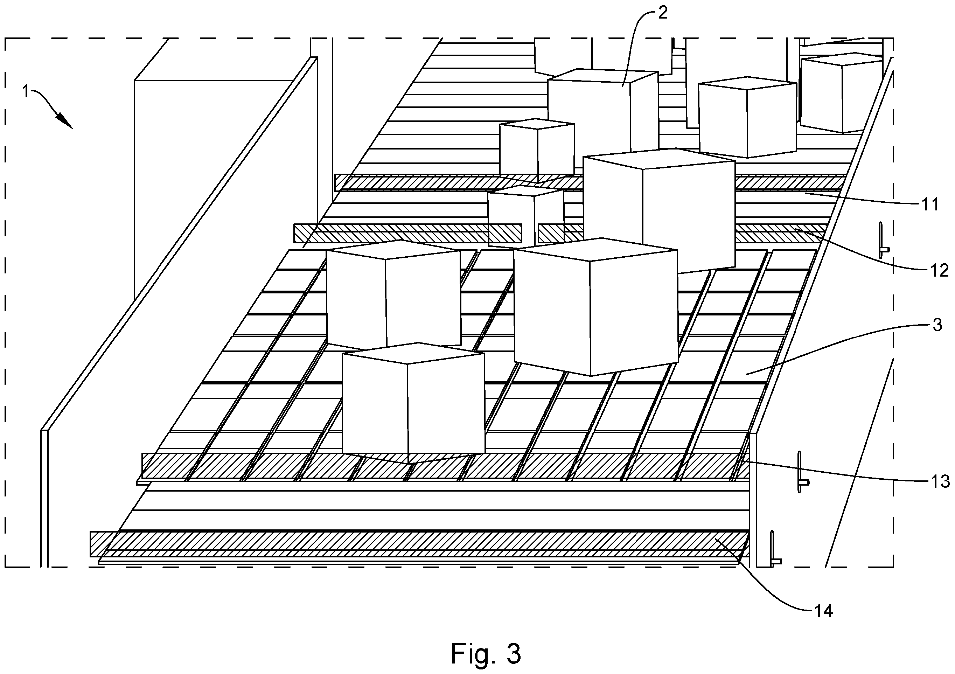

**Fig. 3** ist eine schematische und perspektivische Ansicht eines Teils der Handhabungsvorrichtung 1 gemäß einer Ausführungsform der vorliegenden Erfindung. In Fig. 3 sind die einzelnen steuerbaren Elemente 3, welche als einzelne Förderbänder ausgestaltet sind, zu erkennen. Im Hintergrund ist zu erkennen, dass die Stückgüter 2 zugeführt werden, wohingegen im Vordergrund die Stückgüter die Handhabungsvorrichtung verlassen. Beim Durchlaufen der Handhabungsvorrichtung 1 werden die Stückgüter von einem 2D-Strom einen 1D-Strom überführt (d. h. singuliert oder vereinzelt). Die schematisch angedeuteten Linien 11, 12, 13, 14 stellen bei der vorliegenden Ausführungsform die Punkte dar, an denen die Stückgüter, welche durch die Handhabungsvorrichtung 1 gehandhabt werden, durch die Erfassungsvorrichtung 4 analysiert werden. Genauer gesagt werden an diesen Punkten, Bilder der Stückgüter erstellt. Dadurch kann bestimmt werden, wie die Handhabungsvorrichtung 1 die Stückgüter 2 handhabt. Mit anderen Worten wird an diesen Stellen die Stückgutinformation erstellt.

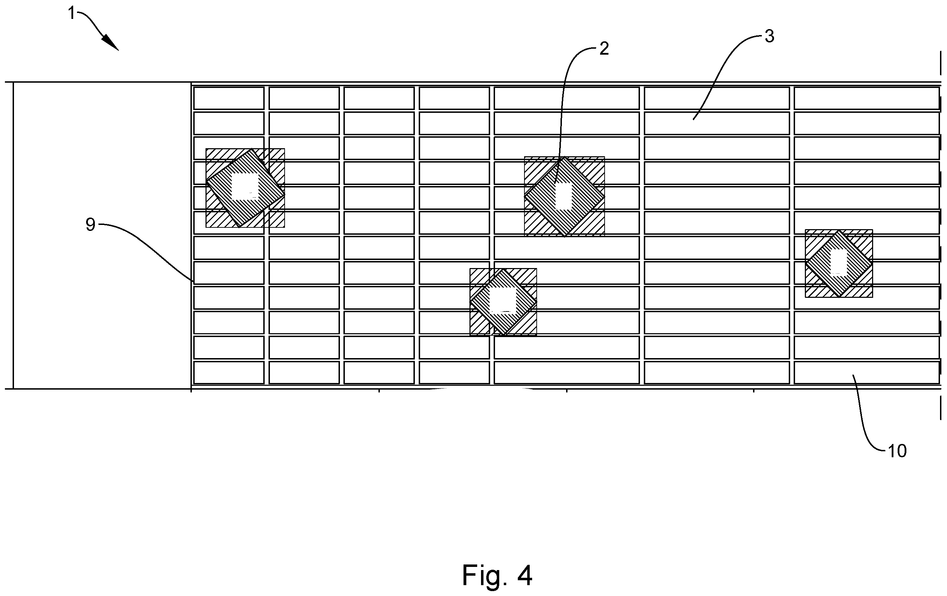

**Fig. 4** ist eine schematische Ansicht eines Handhabungssystems 1 gemäß einer Ausführungsform der vorliegenden Erfindung. Genauer gesagt stellt Fig. 4 eine Ansicht dar, wie sie die Steuervorrichtung 5 der Handhabungsvorrichtung 1 von der Erfassungsvorrichtung 4 aufnimmt. Die Stückgüter sind hierbei durch eine Polygondarstellung vereinfacht. Durch die Erfassungsvorrichtung 4 werden lediglich die Ecken der Stückgüter erfasst und basierend darauf eine Polygondarstellung erstellt. Dadurch kann der Erfassungsprozess beschleunigt werden und das nachträgliche Handhaben der Stückgutinformation beschleunigt werden.

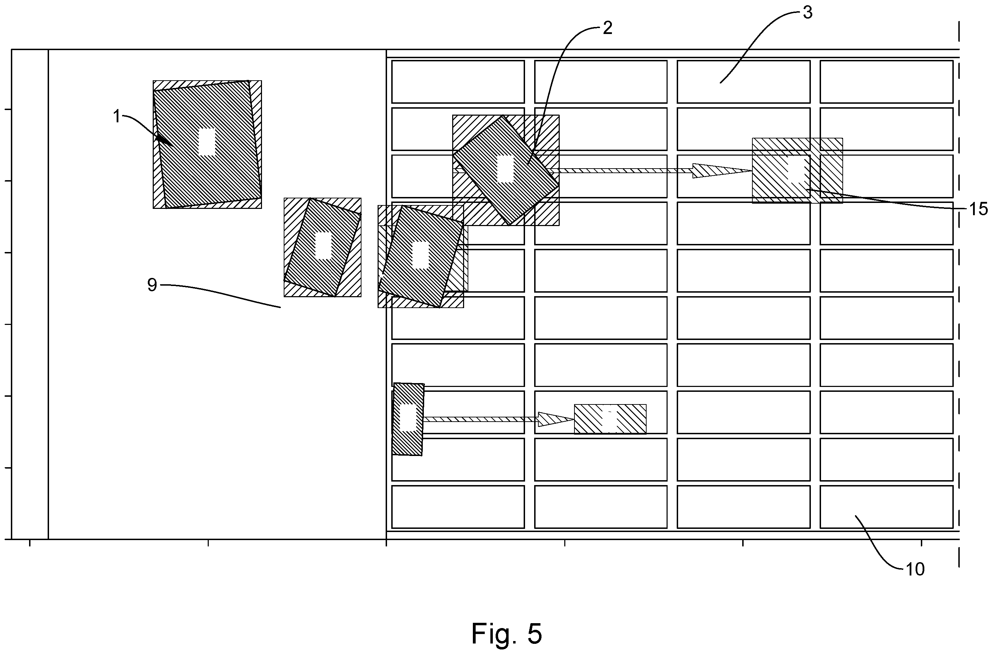

**Fig. 5** ist eine schematische Ansicht einer Handhabungsvorrichtung gemäß einer Ausführungsform der vorliegenden Erfindung. In Fig. 5 ist ähnlich wie in Fig. 4 dargestellt, wie die Steuerungsvorrichtung 5 der vorliegenden Erfindung die Stückgüter 2 erkennt, wenn diese auf der Handhabungsvorrichtung 1 gehandhabt werden. Zusätzlich ist in Fig. 5 eine Zielposition bzw. eine Ziel-Lage der Stückgüter nach einem Handhabungsprozess durch die Handhabungsvorrichtung 1 dargestellt. Mit Bezugszeichen 15 ist markiert, wie die Lage eines Stückguts nach der Handhabung durch die Handhabungsvorrichtung 1 ein realisiert sein sollte. Mit anderen Worten soll das Stückgut gedreht werden. Eine solche gewünschte Lage kann auch durch die Schlüsselkennzahl angegeben werden. Mit anderen Worten kann die Schlüsselkennzahl angeben, wie viele Stückgüter die gewünschte Lage am Ende der Handhabungsvorrichtung erreichen sollen.

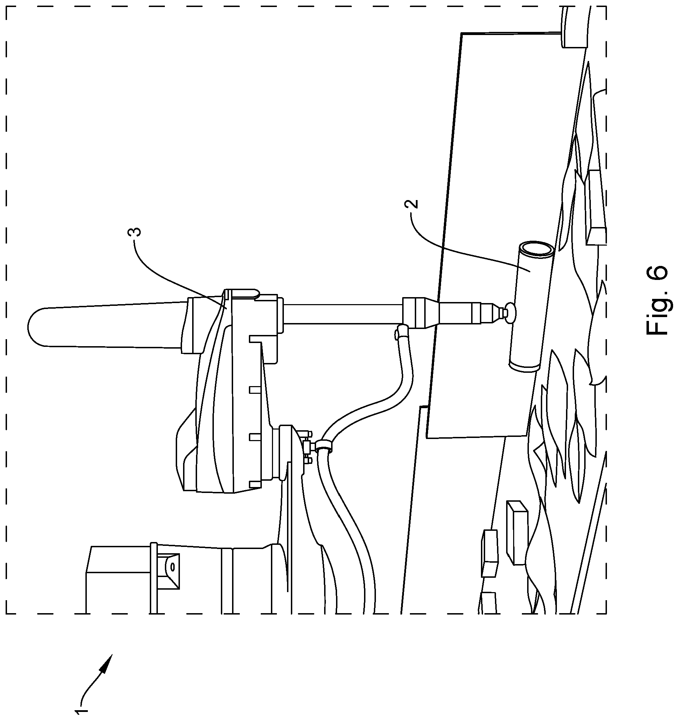

**Fig. 6** ist eine schematische und perspektivische Ansicht einer Handhabungsvorrichtung 1 gemäß einer weiteren Ausführungsform der vorliegenden Erfindung. Bei der vorliegenden Ausführungsform handelt es sich bei der Handhabungsvorrichtung 1 um eine Sauggreifvorrichtung. Ferner ist bei der vorliegenden Ausführungsform ähnlich wie bei der zuvor beschriebenen Ausführungsform eine Erfassungseinheit 4 (in der Figur nicht dargestellt) vorgesehen, um die Stückgutinformation zu erlangen. Die übrigen Funktionsweisen entsprechen der Funktion der in Fig. 2 dargestellten Ausführungsform.

### Bezuqszeichenliste:

- 1: Handhabungsvorrichtung
- 2: Stückgut
- 3: steuerbares Element
- 4: Erfassungsvorrichtung
- 5: Steuervorrichtung
- 6: Sendevorrichtung
- 7: Datenzentrale
- 8: Empfangsvorrichtung
- 9: stromaufwärtiges Ende
- 10: stromabwärtiges Ende
- 11: erste Erfassungslinie
- 12: zweite Erfassungslinie
- 13: dritte Erfassungslinie
- 14: fünfte Erfassungslinie
- 15: Ziel-Lage

## Patentansprüche

1. Computerimplementiertes Verfahren zur Bestimmung einer Steuerungsstrategie zur Steuerung eines Handhabungsprozesses von zumindest einer Handhabungsvorrichtung (1), insbesondere zum Handhaben von Stückgütern (2), umfassend:
- Erfassen oder Erlangen zumindest einer Stückgutinformation zumindest eines Stückguts (2), welches von der Handhabungsvorrichtung (1) gehandhabt wurde,
- Übermitteln der zumindest einen Stückgutinformation zu einer Datenzentrale (7),
- Bestimmen zumindest einer Schlüsselkennzahl des Handhabungsprozesses der Handhabungsvorrichtung (1) basierend auf der zumindest einen Stückgutinformation,
- Bestimmen einer Steuerungsstrategie für die zumindest eine Handhabungsvorrichtung (1) basierend auf der zumindest einen Schlüsselkennzahl.

2. Verfahren gemäß Anspruch 1, wobei die Stückgutinformation eine Positions- und Lageinformation des Stückguts (2) in der Handhabungsvorrichtung (1), einen Zeitstempel, ein Gewicht des Stückguts (2), eine Beschaffenheit des Stückguts (2), eine Verpackungsinformation, eine Adressinformation, eine Absenderinformation, und/oder eine Information über einen Schwerpunkt des Stückguts (2) umfassen.

3. Verfahren gemäß einem der vorhergehenden Ansprüche, wobei eine Vielzahl von Stückgutinformation des Stückguts (2) während des Handhabungsprozesses der Handhabungsvorrichtung (1) erfasst oder erlangt werden.

4. Verfahren gemäß einem der vorhergehenden Ansprüche, wobei die zumindest eine Stückgutinformation einen Zeitstempel, ein Gewicht des Stückguts (2), eine Beschaffenheit des Stückguts (2), eine Verpackungsinformation, eine Adressinformation, eine Absenderinformation und/oder eine Information über einen Schwerpunkt des Stückguts (2) umfasst.

5. Verfahren gemäß einem der vorhergehenden Ansprüche, wobei das Erfassen oder Erlangen der zumindest einen Stückgutinformation ein Bestimmen einer Kontur des Stückguts (2) und ein Bestimmen einer Polygondarstellung des Stückguts (2) basierend auf der Kontur umfasst.

6. Verfahren gemäß einem der vorhergehenden Ansprüche, wobei die zumindest eine Stückgutinformation zumindest teilweise durch ein optisches System, insbesondere der Handhabungsvorrichtung (1), erfasst wird.

7. Verfahren gemäß Anspruch 1 oder 2, wobei die zumindest eine Schlüsselkennzahl indikativ für eine Lücke zwischen zwei Stückgütern (2), einen Durchsatz von Stückgütern (2) pro Zeiteinheit, eine Lage eines Stückguts (2) am Ausgang der Handhabungsvorrichtung (1) und/oder eine Fehlerquote der Handhabung des Stückguts (2) ist.

8. Verfahren gemäß einem der vorhergehenden Ansprüche, wobei das Bestimmen einer Steuerungsstrategie mittels eines digitalen Zwillings der Handhabungsvorrichtung (1) erfolgt.

9. Verfahren gemäß Anspruch 8, wobei mittels Verwendung des digitalen Zwillings eine neue Steuerungsstrategie geprüft wird.

10. Verfahren gemäß einem der Ansprüche 8 bis 9, wobei das Verfahren ferner umfasst:
- Vergleichen der Steuerungsstrategie der Handhabungsvorrichtung (1) mit der neuen Steuerungsstrategie des digitalen Zwillings, und
- Erstellen einer Bewertung der Steuerungsstrategien basierend auf dem Vergleich.

11. Verfahren gemäß einem der vorhergehenden Ansprüche, wobei der Handhabungsprozess der Handhabungsvorrichtung (1) die Anwendung eines Algorithmus umfasst, wobei der Algorithmus basierend auf der Steuerungsstrategie dazu ausgestaltet ist, basierend auf Stückgutinformationen als Eingangsdaten Steuerbefehle als Ausgabedaten auszugeben.

12. Verfahren gemäß einem der vorhergehenden Ansprüche, wobei es sich bei dem Algorithmus um einen lernenden Algorithmus handelt.

13. Verfahren gemäß einem der vorhergehenden Ansprüche, wobei Stückgutinformationen von einer Vielzahl von Handhabungsvorrichtungen (1) in der Datenzentrale (7) aufgenommen werden.

14. Computerprogramm, das Anweisungen umfasst, die, wenn das Programm von einer Recheneinheit ausgeführt wird, die Recheneinheit veranlassen, das Verfahren gemäß einem der vorhergehenden Ansprüche auszuführen.

15. Handhabungsvorrichtung (1) zum Handhaben von Stückgütern (2) in einem Handhabungsprozess, umfassend:
zumindest ein steuerbares Element (3) zum physischen Handhaben von Stückgütern (2),
eine Erfassungsvorrichtung (4) zum Erfassen von zumindest einer Stückgutinformation von zumindest einem Stückgut (2), das während des Handhabungsprozesses gehandhabt wird,
eine Steuervorrichtung (5) zum Steuern des zumindest einen steuerbaren Elements (3) gemäß einer Steuerungsstrategie basierend auf der zumindest einen Stückgutinformation,
eine Sendevorrichtung (6), die dazu ausgestaltet ist, die Stückgutinformationen an eine Datenzentrale (7) zu senden,
eine Empfangsvorrichtung (8), die dazu ausgestaltet ist, eine neue Steuerungsstrategie von der Datenzentrale (7) zu empfangen,
wobei die Steuervorrichtung (5) dazu ausgestaltet ist, die Steuerungsstrategie entsprechend der neuen Steuerungsstrategie anzupassen.
